# EUROPEAN PATENT APPLICATION

(11) **EP 4 717 094 A1**
(43) Date of publication of application: **01.04.2026**
(21) Application number: 24202823.1
(22) Date of filing: 26.09.2024
(51) Int. Cl.: A23K 20/10, A23K 20/111, A23K 40/30, A23K 50/10, A23K 50/75, A23L 33/105

(54) **PHYTOCHEMICAL SUBSTANCES AND A COMBINATION THEREOF AS A COMPOSITION FOR THE TREATMENT OF COCCIDIOSIS**

(71) Applicant: Becker, Diko Holger, 46414 Rhede Krommert (DE)
(72) Inventor: Becker, Diko Holger, 46414 Rhede Krommert (DE)
(74) Representative: Kayser, Christoph

(57) **Abstract**

A composition and feedstuff comprising such composition with at least one phytochemical substance for use in the control, treatment or prevention of coccidiosis and a method thereto.

## Description

The present invention relates to a composition, a method and to feedstuff of phytochemical substances for the control, prevention, and treatment of coccidiosis.

The present invention also relates to a combination of phytochemical substances for use as growth promoters to replace the conventional promoters (antibiotics and coccidiostats)

Coccidiosis is a disease caused by intracellular protozoan parasites that specifically belong to the genus *Eimeria.* These parasites infest the gastrointestinal tract of various hosts and cause wounds in the intestinal mucosa. Coccidiosis is a common disease in poultry, pigs, ruminants, and domestic animals.

In ruminants and pigs, for example, coccidiosis can damage enterocytes, which can impair growth performance in the short- and long term by reducing nutrient absorption and increasing mortality and morbidity.

In poultry there are a variety of Eimeria species such as: *Eimeria acervulina, Eimeria maxima, Eimeria brunetti, Eimeria mitis, Eimeria praecox, Eimeria necatrix,* and *Eimeria tenella.* This pathogen develops intracellularly in certain regions of the gastrointestinal tract of birds, resulting in severe damage to the intestine and increased

intestinal permeability. Coccidiosis often occurs in birds between 21 to 50 days of age. The mortality rate can be over 80%. It also leads to excessive mucus and fluid formation, scaling of the intestines and erosion of the stomach. Coccidiosis reduces growth performance by disrupting intestinal energy metabolism, impairing ATP production and consumption, leading to inflammation and oxidative stress. When the balance in the gut is disturbed, the birds consequently become more susceptible to other diseases, such as *Clostridium perfrigens.* This affects both the health and productivity of birds. Diarrhea increases e.g. the moisture content of the litter, which in turn leads to footpad injuries.

The typical Eimeria of coccidiosis in poultry are, but not limited to: *Eimeria acervuline, Eimeria maxima, Eimeria brunetti, Eimeria mitis, Eimeria praecox, Eimeria necatrix,* and *Eimeria tenella.*

Coccidiosis is usually treated with anticoccidials. However, the indiscriminate use of anticoccidials and antibiotics has led to increased resistance, and consumer pressure to reduce the use of these molecules has favored the search for natural alternatives. In addition, both (anticoccidials and antibiotics) have been used as growth promoters. Therefore, the use of both drugs has been reduced recently.

This parasitic infection, caused by protozoa of the genus *Eimeria* spp., leads to significant losses due to disease and mortality. In 2016, it was estimated that this disease costs the poultry industry worldwide between 7 and 13 billion US dollars annually. A bird suffering from Eimeriosis is the source of this infection. In dysfunctional poultry farms, transmission of the infection occurs via litter, feeders, feed, water, and equipment contaminated with sporulated oocysts. Synanthropic birds, rodents, insects, flies, cockroaches, crickets, and service personnel - on shoes, clothes, and bird care items - often become mechanical carriers of Eimeria oocysts. Various violations of the technology of rearing young animals contribute to the wide spread of Eimeriosis among chickens, including high humidity and litter, crowded poultry on the premises, inadequate feeding, contact between chickens and poultry of older age groups, as well as violations of veterinary and sanitary rules. In addition, bird coccidial oocysts are very stable in the external environment, and even in areas with rainy summers and cold winters, Eimeria oocysts can remain viable for more than a year.

It is necessary to use efficient alternative control, prevention and treatment methods to replace antibiotics as growth promoters. This will help to reduce the development of resistance in pathogenic bacteria and protozoa.

Alternative homeopathic therapies for the treatment of coccidiosis are not economically viable and there is no literature data to prove the effect on coccidiosis.

Therefore, the object of the invention is to present alternatively phytochemical substances for the control, prevention, and treatment of coccidiosis that have fewer or no side effects and are less harmful to the environment, but just as effective as anticoccidials and antibiotics.

The control, prevention, and treatment of coccidiosis is done by using phytochemicals and specific relationships between them, as in particular combinations of curcumin, curcuminoids, carvacrol, thymol, p-cymene, cinnamaldehyde and tannins. These isolated compounds or substances may already have a potential coccidiostatic effect, but the effects of different combinations of these phytochemicals have not yet been investigated. To do so is one aspect of the present invention.

These compounds can be extracted from plants of natural origin with a defined concentration of phytochemicals or synthetic phytochemicals.

Another aspect of the present invention is the use of pure phytochemicals, the concentration of which is about 90-99% and does not vary greatly. Unlike products made from plant extracts, only the concentration of the species is indicated; however, it is doubtful whether they are the same plant species with the same genetic or epigenetic characteristics if they are located in two completely different climates, for example. Therefore, the effectiveness of these plant extracts varies. Plant extracts are subject to considerable fluctuations in their composition. The country, climate zone, season, time of harvest, soil moisture, solar radiation, fertilization, microbiological or insect infestation, type of extraction and genetic variants of a species have a significant influence on the overall concentration and composition of the active phytochemicals in the extracts.

The various combinations of phytochemicals in the present invention have antioxidant and anti-inflammatory properties. So, these combinations can reduce cellular oxidative stress by reducing free radical production and indirectly inducing apoptosis. The NF-kB signaling pathway is upregulated, reducing the production of nitrous oxide (NO), and the expression of pro-inflammatory markers involved in NO production is downregulated, leading to a reduction in NO levels and ultimately preventing inflammation.

The composition of at least one phytochemical substance according to the invention represents a synergistic combination of phytochemicals and can be used to treat and prevent coccidiosis in poultry and mammals without the need to use coccidiostat as a feed additive.

At the same time, it has been shown that the phytochemical substance increases the growth performance and intestinal health of poultry.

In particular, the combination of phytochemical substances according to the invention does not trigger resistance to protozoa and pathogenic bacteria.

Advantageously, the phytochemical substances can be encapsulated or microencapsulated in an edible substance, e.g. in fats, for oral absorption.

The inventive composition of at least one phytochemical substance can be mixed into the particular feed in an amount of 50 to 300 mg/kg feed.

The compositions in the present invention can be added to animal feed, as an additive or as a premix. A corresponding feed, feed additive or premix may comprise the phytochemical substance as an ingredient and other components as another ingredient, such as fillers. Advantageously, the food or feed additive may also contain probiotics. Flavorings may also be added to facilitate absorption.

The food or feed additive may be produced particularly in the form of powder, paste, pellets, tablets, and capsules.

The inventive additive of phytochemical substances can be produced in the following proportions:
8 to 12 % by weight of curcumin and/or curcuminoids
16 to 24% by weight of carvacrol
14 to 21% by weight of thymol
1.6 to 2.5% by weight of p-cymene
33 to 49 % by weight of cinnamaldehyde
5 to 7.5% by weight of tanning agent

The indication that the proportions must be in the order of magnitude indicated in each case means that deviations of 20% more or less from the values indicated are deemed to be still more effective than prior art.

The term 'animal' in the present invention includes all animals including humans. Examples of animals include non-ruminants and ruminants. Ruminant animals include animals such as sheep, goats, and cattle, e.g., cows, beef cattle, and dairy cows. Examples of non-ruminant animals are horses, rabbits, pigs, or pigs (including but not limited to, piglets, growing pigs, boars, and sows), and poultry. In a particularly preferred embodiment, the animal is poultry.

The present invention is, however, not limited to poultry, which is defined as domesticated birds kept by humans for their eggs, meat or feathers, but also includes turkeys, ducks, and chickens (including but not limited to broiler chicks, layering hens), geese, pigeons.

### Clinical study

A total of 240-day-old male broiler chickens (Cobb) were sorted by body weight and randomly assigned to six dietary treatments, each with eight replicates and five birds per house. Treatments included a non-challenge group (CN), a challenge group (PC), a coccidiostat supplemented with diclazuril (100 g/ton feed), supplemented with carvacrol, thymol and cinnamaldehyde microencapsulate (200 g/ton feed), PC supplemented with carvacrol, thymol and cinnamaldehyde microencapsulation plus tannin (66 g/ton feed) and PC supplemented with carvacrol, thymol, and cinnamaldehyde microencapsulation plus tannin plus curcumin (72 g/ton feed).

To ensure the presence of coccidial challenge, birds were individually challenged for coccidiosis at 21 days of age, receiving a live oral vaccine at a dose eight times higher (approximately 28,000 oocysts/bird) than recommended by the manufacturer, containing sporulated oocysts *of E. acervulina, E. maxima,* and *Eimeria tenella.*

At 28, 35, and 42 days of age, fresh fecal samples were collected at four random points to represent the total area of each experimental unit. Approximately 20g of fresh feces were collected from each experimental unit for analysis. The samples were prepared using the centrifugal flotation technique. A pool of 1g of feces was used, diluted in 15ml of sucrose solution, centrifuged for 5min and then read under an optical microscope (100x) to count oocysts.

### Results

The oocyst numbers of *Eimeria* spp in broilers receiving different dietary treatments are shown in Figure 1 (day 28), Figure 2 (day 35), and Figure 3 (day 45).

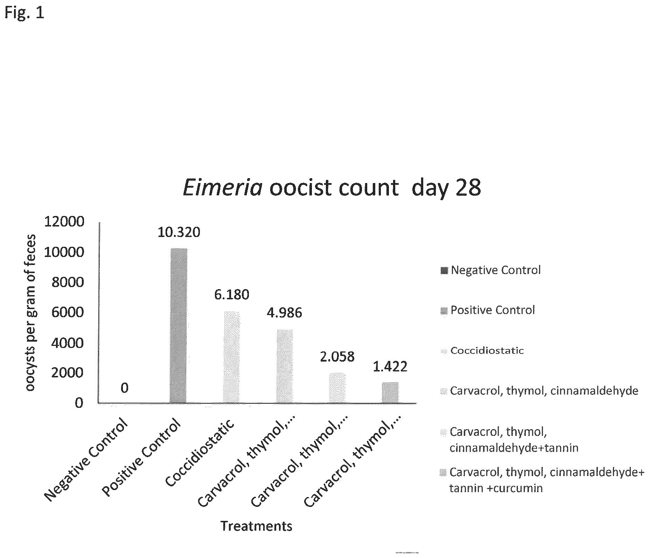

Figure 1: The number of *Eimeria* spp on day 28 of the experiment

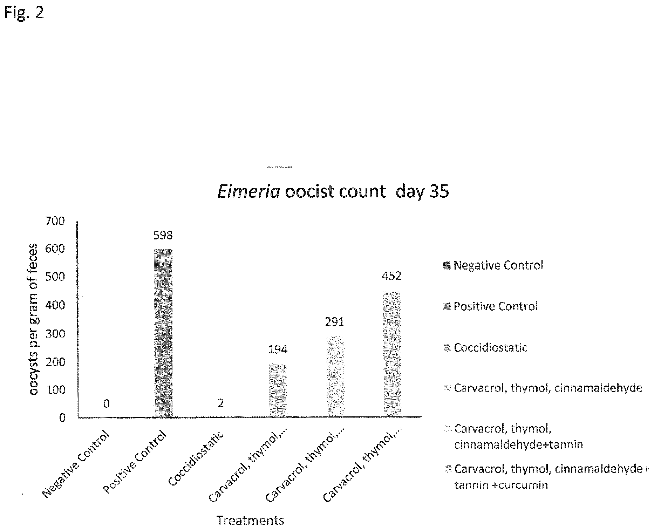

Figure 2: The number of *Eimeria* spp count on day 35 of the experiment

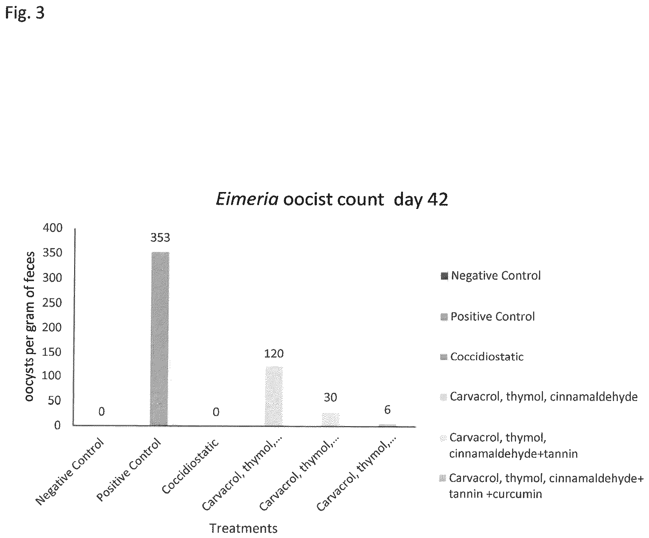

Figure 3: The number of *Eimeria* spp on day 42 of the experiment

No differences were found between the treatments fed with the active substances and the coccidiostat group. All treatments resulted in higher weight gain and better feed conversion on days 1-35 than in the positive control (P=0.01). (Table 1). On days 1-42, a higher weight gain was observed in the negative control (non-challenged) after treatment with the active substances and coccidiostat compared to the positive control (P=0.01). All treatments resulted in better feed conversion than the positive control (P=0.01; Table 1).

**Table 1: Growth performance of broilers fed with active substances.**

| **Groups** | **Feed intake (kg)** | **Weight gain (kg)** | **Feed conversion** |
|---|---|---|---|
| **Days 1 to 21** | | | |
| Control negative | 1.22 | 0.96 | 1.26 |
| Control positive | 1.25 | 0.97 | 1.26 |
| Coccidiostatic | 1.23 | 0.95 | 1.28 |
| Microescapsulated essential oil (MEO) | 1.2 | 0.94 | 1.28 |
| MEO + Tanin | 1.22 | 0.93 | 1.31 |
| MEO + Tanin + Curcumin | 1.23 | 0.95 | 1.28 |
| SEM | 0.04 | 0.02 | 0.03 |
| P-value | 0.91 | 0.89 | 0.87 |

| **Days 1 to 35** | | | |
|---|---|---|---|
| Control negative | 2.81 | 2.18a | 1.29b |
| Control positive | 2.86 | 1.95b | 1.47^{a} |
| Coccidiostatic | 2.76 | 2.09a | 1.32b |
| Microescapsulated essential oil (MEO) | 2.82 | 2.10a | 1.33b |
| MEO + Tanin | 2.87 | 2.12a | 1.35b |
| MEO + Tanin + Curcumin | 2.85 | 2.15a | 1.32b |
| SEM | 0.06 | 0.07 | 0.03 |
| P-value | 0.36 | 0.01 | 0.01 |

| **Days 1 to 42** | | | |
|---|---|---|---|
| Control negative | 3.97^{a} | 2.68a | 1.48b |
| Control positive | 3.92^{a} | 2.36c | 1.66^{a} |
| Coccidiostatic | 3.78b | 2.54b | 1.49b |
| Microescapsulated essential oil (MEO) | 3.88ab | 2.60b | 1.49b |
| MEO + Tanin | 3.91^{a} | 2.58b | 1.51b |
| MEO + Tanin + Curcumin | 3.88ab | 2.61ab | 1.49b |
| SEM | 0.09 | 0.08 | 0.05 |
| P-value | 0.05 | 0.01 | 0.01 |

Different letters a, b, c within a row indicate significant differences between the groups using Tukey's post hoc test. Non-challenge group (CN), challenge group (PC), Coccidiostat supplemented with diclazuril (100 g/ton feed), supplemented with carvacrol, thymol and cinnamaldehyde microencapsulation (200 g/ton feed), PC supplemented with carvacrol, thymol and cinnamaldehyde microencapsulation plus tannin (66 g/ton feed) and PC supplemented with carvacrol, thymol, and cinnamaldehyde microencapsulation plus tannin plus curcumin (72 g/ton feed).

The clinical symptoms of coccidiosis are associated to intestinal mucosa, higher intestinal permeability, reduced feed intake, and growth depression. In the current trial, the success of the coccidial supplement was demonstrated by a reduction in the number of oocysts in the feces, which is similar to that in the coccidiostat control.

### Clinical trial 2

225 one-day-old male chicks of Cobb500 chicks were sorted by body weight and randomly assigned to four dietary treatments with four replicates and 15 broilers per pen. The experimental design consisted of five treatments; two groups served as control (positive and negative) and the other three were tested as follows (two isolated additives, one combined preparation): NC, broilers fed only basal diet feed (without antibiotics and coccidiostats) and used as a negative control group; PC, broilers fed basal diet containing 55 ppm zinc bacitracin and 80 ppm salinomycin and defined as positive control group; CU, birds fed 50 mg/kg curcumin; PHY, broilers fed 100 mg/kg of phytogenic feed containing encapsulated carvacrol, thymol, and cinnamaldehyde; CU + PHY, birds fed 50 mg/kg of curcumin and 100 mg/kg of phytogenic feed.

On days 21 and 44, 1 g of feces was weighed and diluted in 9 mL of peptone water which was poured into test tubes and homogenized on a vortex shaker. Sterile materials were in handling the samples to avoid environmental contamination. This procedure started with dilution 10¹, from which further dilutions up to 10⁶ performed, always inoculating 1 mL of the previous dilution into 9 mL of buffered peptone water. Then 1 mL of 10⁶ dilutions of each sample was inoculated into 3 M^{™} Petrifilm^{™} plates to count total coliforms (CT) and *E. coli* (EC). The CT and EC inocula were incubated in a bacteriological oven at 37 °C for 24 and 48 h, respectively. The results were expressed as colony forming units per ml (CFU/mL).

On day 44, eight broilers per treatment were euthanized to collect intestinal samples (jejunum) and the samples were then stored in flasks containing 10% formaldehyde. Histological sections were prepared and stained with hematoxylin and eosin. The length of the villi and the depth of the crypt were determined. The histological images were recorded with a digital microchamber video camera connected to a biological trinocular microscope, model TNB-41T- PL (OPTON) and a special program for recording of histological images.

### Results

The treatments with active substances had similar growth performance to the positive control with antibiotics and coccidiostats. Therefore, active substances can replace conventional growth performance.

**Table 2: Performance of broiler chickens fed experimental diets containing curcumin and a plant phytogenic product as a replacement for antibiotics**

| Variables | Days | NC | PC | PHY | CU | PHY + CU | P value |
|---|---|---|---|---|---|---|---|
| | 1 | 45.2 | 44.4 | 45 | 45.5 | 45.3 | 0.97 |
| Weight (g) | 21 | 939.5^{b} | 977.0ab | 956.6^{ab} | 988.0^{a} | 975.3^{ab} | 0.04 |
| | 35 | 2325.4^{b} | 2403.1^{ab} | 2382.2^{ab} | 2353.3^{ab} | 2449.7^{a} | 0.05 |
| | 44 | 3127.4 | 3183.7 | 3289 | 3099 | 3282.5 | 0.07 |
| Weight gain (g) | 1-21 | 894.5^{b} | 932.8^{ab} | 911.7^{ab} | 942.4^{a} | 929.4^{a} | 0.02 |
| | 1-35 | 2279.7^{b} | 2358.2^{ab} | 2336.8^{ab} | 2307.9^{ab} | 2402.7^{a} | 0.01 |
| | 1-44 | 3081.8 | 3140.1 | 3243.4 | 3053.9 | 3235.1 | 0.06 |
| Daily weight gain | 1-21 | 42.5 | 44.4 | 43.4 | 44.8 | 46.4 | 0.07 |
| (g) | 1-35 | 65.1^{b} | 67.3^{ab} | 66.7^{ab} | 65.9^{ab} | 68.6^{a} | 0.04 |
| | 1-44 | 73.3^{b} | 74.7^{ab} | 77.2^{a} | 72.7^{b} | 77.0^{a} | 0.02 |
| Feed intake (g) | 1-44 | 5205.9 | 5117.1 | 5274.6 | 5167.8 | 5224.1 | 0.52 |
| Feed conversion | 1-21 | 1.39^{a} | 1.29^{ab} | 1.32^{ab} | 1.29^{b} | 1.34^{ab} | 0.03 |
| ratio (FCR) | 1-35 | 1.53^{a} | 1.47^{b} | 1.51^{ab} | 1.51^{ab} | 1.46^{b} | 0.01 |
| | 1-44 | 1.69^{a} | 1.62^{b} | 1.62^{b} | 1.69^{a} | 1.61^{b} | 0.02 |
| Mortality (%) | 1-44 | 1.48 | 2.22 | 0.74 | 0 | 1.48 | - |

Different letters a, b within a line indicate significant differences among groups using Tukey's post-hoc test. Group CN, control group (basal diet); group PC, basal diet + bacitracin zinc (55 mg/kg) and salinomycin (80 mg/kg); group PHY, basal diet + phytogenic (100 mg/kg); group TCU, basal diet + curcumin (50 mg/kg); group PHY + CU, basal diet + phytogenic (100 mg/kg) and curcumin (50 mg/kg).

At 21 days, the number of total bacteria in the PC group was lower than in the other groups, followed by the PHY + CU group, which was significantly lower than the number in the PHY, CU, and NC groups. At 44 days, the number of bacteria in the PHY + CU and PC groups was significantly higher than in the NC group. At 21 days, the number of *E. coli* was significantly higher in the NC, PHY, and CU, whereas at 44 days, the counts were significantly higher in the PHY + CU and PC groups than in the NC group.

**Table 3: Number of bacterial in broiler chickens fed an experimental diet containing curcumin and a plant phytogenic product to substitute for antibiotics.**

| Variables | Days | NC | PC | PHY | CU | PHY + CU | P |
|---|---|---|---|---|---|---|---|
| Total bacterial count (x 10⁶ | 21 | 213.3^{a} (85.6) | 16.3^{c} (12.7) | 195.6^{a} (132) | 199.6 a (104) | 52.3 ^{b} (24.1) | 0.001 |
| UFC) | 44 | 18.6^{c} (14.5) | 47.4 ^{ab} (36.8) | 33.6 ^{bc} (13.8) | 18.6^{c} (8.7) | 68.0^{a} (35.4) | 0.045 |
| *E. coli* count (x 10⁶ UFC) | 21 | 117.3^{a} (65.1) | 7.0^{b} (5.2) | 127.0^{a} (85.1) | 98.6^{a} (58.6) | 32.3 ^{b} (25.0) | 0.001 |
| | 44 | 10.5^{c} (3.8) | 35.6 ^{ab} (13.8) | 14.8 ^{bc} (10.2) | 10.6^{c} (4.4) | 59.1^{a} (24.6) | 0.001 |

| | | | | | | | |
|---|---|---|---|---|---|---|---|
| ^{a-b} Different letters within a line indicate significant differences between the groups using Tukey's post-hoc test. Group CN, control group (basal diet); group PC, basal diet + bacitracin zinc (55 mg/kg) and salinomycin (80 mg/kg); group PHY, basal diet + phytogenic (100 mg/kg); group CU, basal diet + curcumin (50 mg/kg);group PHY + CU, basal diet + phytogenic (100 mg/kg) and curcumin (50 mg/kg). | | | | | | | |

The intestinal villi were significantly smaller in the CU group than in the NC group, but significantly larger in the PHY + CU group than in the NC group. The size of the intestinal crypt was significantly smaller in the PHY and CU groups than in the NC group. The villus/crypt ratio was significantly higher in the PHY + CU and PHY groups than in the NC group. Therefore, both formulations can replace antibiotics and coccidiostats in poultry diets without compromising growth performance and intestinal health.

**Table 4: Size of intestinal crypts and villi of 44-day-old broiler chickens fed an experimental diet containing curcumin and an herbal phytogenic product as a substitute for antibiotics.**

| Treatment | Intestinal villi (µm) | Intestinal crypts (µm) | Villus/crypt ratio |
|---|---|---|---|
| NC | 1624.2 404.4 (70.2)^{a} | (225.8) ^{ab} | 4.01 (0.24)^{c} |
| PC | 1512.5 (68.1) ^{ab} | (114.9)^{b} 329.1 | 4.59 (0.46)^{bc} |
| PHY | 1558.6 311.4 (50.8) | (204.5) ^{ab bc} | 5.00 (0.37)^{ab} |
| CU | 1157.8 (27.8)^{c} | (131.3)^{c} 249.3 | 4.64 (0.21)^{abc} |
| PHY + CU | 1872.3 (59.0)^{a} | (224.0)^{a} 349.4 | 5.35 (0.25)^{a} |
| P-value | 0.001 | 0.001 | 0.001 |

Different letters a, b within a line indicate significant differences among groups using Tukey's post-hoc test. Group CN, control group (basal diet); group PC, basal diet + bacitracin zinc (55 mg/kg) and salinomycin (80 mg/kg); group PHY, basal diet + phytogenic (100 mg/kg); group TCU, basal diet + curcumin (50 mg/kg); group PHY + CU, basal diet + phytogen (100 mg/kg) and curcumin (50 mg/kg).

### Conclusions

The addition off coccidia leads to a lower number of *Eimeria* spp.. The result is very similar when the coccidiostat is fed to the feed, with the combination of curcumin, thymol, cinnamaldehyde + tannin+ curcumin proving to be more effective.

Inhibition of reproduction in *Eimeria* spp. occurs through reduced membrane stability, which leads to energy loss of the parasite to maintain homeostasis and changes in membrane proteins. Therefore, these components can impair ion transport by destroying the coccidial cell membrane.

The invention leads to an increase in the intestinal surface area and a better ratio between microvilli and crypts, indicating better intestinal integrity. This improves nutrient absorption, and consequently growth performance and general health. Therefore, this invention can improve the production indicators and economic benefits of broiler chickens and reduce the use of anti-coccidial drugs.

## Claims

1. A composition comprising at least one phytochemical substance for use in the control, treatment or prevention of coccidiosis.

2. A feedstuff or feed supplement composition comprising at least one phytochemical substance for use in the control, treatment or prevention of coccidiosis.

3. The composition as claimed in claim 1 or 2, for use in the control, treatment or prevention of coccidiosis in an animal, wherein at least one phytochemical substance is selected from substances in a group including curcumin, curcuminoids, carvacrol, thymol, p-cymene, cinnamaldehyde, and tannins.

4. The composition as claimed in one of claims 1 to 3, wherein at least one phytochemical substance is selected from substances in a group including curcumin, curcuminoids, carvacrol, thymol, p-cymene, cinnamaldehyde, and tannins or in a combination of at least two different substances in this group.

5. The composition as claimed in any preceding claim, wherein at least one phytochemical substance is administered in a dose in the range of 1.6 to 49% by weight.

6. The composition as claimed in any preceding claim, wherein the at least one phytochemical substance is curcumin and/or a curcuminoid, which is administered in a dose in the range of 8 to 12% by weight.

7. The composition as claimed in any preceding claim, wherein at least one phytochemical substance is carvacrol, which is administered in a dose in the range of 16 to 24% by weight.

8. The composition as claimed in any preceding claim, wherein at least one phytochemical substance is thymol, which is administered in a dose in the range of 14 to 21% by weight.

9. The composition as claimed in any preceding claim, wherein at least one phytochemical substance is p-cymene, which is administered in a dose in the range of 1.6 to 2.5% by weight.

10. The composition as claimed in any preceding claim, wherein the at least one phytochemical substance is cinnamaldehyde, which is administered in a dose in the range of 33 to 49% by weight.

11. The composition as claimed in any preceding claim, wherein the at least one phytochemical substance is a tanning agent, which is administered in a dose in the range of 5 to 7.5% by weight.

12. The composition as claimed in any preceding claim, wherein at least one phytochemical substance is encapsulated in an edible substance.

13. Feedstuff for animals, wherein the composition as claimed in any preceding claim is mixed in an amount of 50 to 300 mg/kg feed.

14. Feedstuff for animals as claimed in claim 13, wherein the composition as claimed in any preceding claims is administered to animals as a feed additive or as a feed premix.

15. Feedstuff for animals as claimed in claim 13, wherein the composition as claimed in any preceding claims is encapsulated in an edible substance.

16. A method of treating and/or controlling an animal with, or at risk of, coccidiosis by administering a composition having an effective amount of at least one phytochemical substance.

17. The method as claimed in claim 16, wherein the at least one phytochemical substance is selected from substances in a group including curcumin, curcuminoids, carvacrol, thymol, p-cymene, cinnamaldehyde and tannins.

18. The method as claimed in claims 16 and 17 wherein the composition is mixed to feed.

19. The method as claimed in claims 16 to 18, wherein the composition is encapsulated in an edible substance.
